# EUROPEAN PATENT SPECIFICATION

(11) **EP 3 634 148 B1**
(45) Date of publication and mention of the grant of the patent: **27.08.2025**
(21) Application number: 18743265.3
(22) Date of filing: 28.06.2018
(51) Int. Cl.: A23K 50/10, A23K 20/20

(54) **COMPOSITION TO CONTROL RUMEN RELEASE OF COBALT TO RUMEN BACTERIA FOR MAKING VITAMIN B12**
ZUSAMMENSETZUNG ZUR STEUERUNG DER FREISETZUNG VON COBALT IM PANSEN AUF PANSENBAKTERIEN ZUR HERSTELLUNG VON VITAMIN B12
COMPOSITION PERMETTANT DE RÉGULER LA LIBÉRATION DU COBALT DANS LE RUMEN EN BACTÉRIES DU RUMEN POUR LA FABRICATION DE VITAMINE B12

(30) Priority: 12.07.2017 US 201715647944
(43) Date of publication of application: 15.04.2020
(73) Proprietor: Zinpro Corporation, Eden Prairie, MN 55344 (US)
(72) Inventor: STARK, Peter, A., Eden Prairie MN 55344 (US)
(74) Representative: Tomkinson, Alexandra
(86) International application number: PCT/US2018/039950
(87) International publication number: WO 2019/013984

(56) References cited:
- WO-A1-91/11915
- GB-A- 866 924
- AMMERMAN C. B. ET AL: "Nutrient and mineral composition of citrus pulp as related to production source", EIGHTY-FIRST ANNUAL MEETING OF THE FLORIDA STATE HORTICULTURAL SOCIETY, vol. 81, 8 April 1969 (1969-04-08), pages 301 - 306, XP093045704
- K UCHIDA ET AL: "Effect of feeding a combination of zinc, manganese and copper amino acid complexes, and cobalt glucoheptonate on performance of early lactation high producing dairy cows", ANIMAL FEED SCIENCE AND TECHNOLOGY, vol. 93, no. 3-4, 1 October 2001 (2001-10-01), AMSTERDAM, NL, pages 193 - 203, XP055500588, ISSN: 0377-8401, DOI: 10.1016/S0377-8401(01)00279-6
- H T BALLANTINE ET AL: "Effects of Feeding Complexed Zinc, Manganese, Copper, and Cobalt to Late Gestation and Lactating Dairy Cows on Claw Integrity, Reproduction, and Lactation Performance", THE PROFESSIONAL ANIMAL SCIENTIST, vol. 18, no. 3, 1 September 2002 (2002-09-01), pages 211 - 218, XP055500539, DOI: doi.org/10.15232/S1080-7446(15)31524-2
- D T PAL ET AL: "Organic trace minerals for improving livestock production", BROADENING HORIZONS NO 15, 1 May 2015 (2015-05-01), www.feedipedia.org/content/organic-trace-minerals-improving-livestock-production, pages 1 - 14, XP055500431, Retrieved from the Internet <URL:https://web.archive.org/web/20150922124848/https://www.feedipedia.org/content/organic-trace-minerals-improving-livestock-production> [retrieved on 20180817]
- "Mineral Nutrition of Livestock", 1 January 2010, CABI, ISBN: 978-1-84593-473-6, article N F SUTTLE: "Chapter 10 - Cobalt", pages: 223 - 254, XP055500623
- CARMEN VALADEZ-VEGA ET AL: "Lead, Cadmium and Cobalt (Pb, Cd, and Co) Leaching of Glass-Clay Containers by pH Effect of Food", INTERNATIONAL JOURNAL OF MOLECULAR SCIENCES, vol. 12, no. 4, 4 April 2011 (2011-04-04), pages 2336 - 2350, XP055500649, DOI: 10.3390/ijms12042336

## Description

### FIELD OF THE INVENTION

This invention relates to a cobalt mixture that is a new source of cobalt for domesticated ruminant animals. Taking advantage of a mixture of cobalt salts that are a combination of fast cobalt release and slow cobalt release in the rumen of ruminant animals the cobalt is available to the rumen bacteria of a ruminant animal over a steady period of time for the bacteria to produce Vitamin B₁₂ needed for the animal health and milk production during lactation.

### BACKGROUND OF THE INVENTION

Vitamin B₁₂ is unique among the vitamins in that it contains not only an organic molecule, but also the essential trace element cobalt. Vitamin B₁₂ is not made by either plants or animals and can be synthesized by only a few species of microorganisms. Bacteria in the human intestinal tract can make enough Vitamin B₁₂ for normal daily requirements from inorganic cobalt salts in the diet. Vitamin B₁₂ is also made in large amounts by rich populations of bacteria in the rumen of ruminant animals and in the cecum of other herbivorous species.

Vitamin B₁₂ participates in many biochemical processes that are essential for life. It acts as a co-enzyme for several enzymes which catalyze the shift of a hydrogen atom from one carbon atom to an adjacent one in exchange for an alkyl, carboxyl, hydroxyl or amino groups. Deficiency of Vitamin B₁₂ results in the development of the serious disease pernicious anemia. Pernicious anemia, as the name implies, involves a low concentration of hemoglobin resulting from the condition, but the effects also include serious disturbances of the central nervous system that may result in abnormal sensations, motion, and in humans, thought.

Vitamin B₁₂ is known to have a positive effect on lactation performance of dairy cows, see for example the Journal of Dairy Science, 2005 February; 88(2): 671-6, Girard et al. which shows that in early lactation the supply of Vitamin B₁₂, if deficient, limits the lactation performance of cows. Since cobalt is needed in animal nutrition as a key component to Vitamin B₁₂ production it therefore follows that ruminants need adequate dietary supply of cobalt for effective animal nutrition and efficient lactation performance. In ruminants, the soluble portion of the ruminal material (solids and liquids) is turned over faster than the solids. This means that highly soluble sources of cobalt will remain in the rumen less time than insoluble forms. This disclosure relates to the ability of a ruminant's bacteria to produce Vitamin B₁₂. The need for increased B₁₂ production can be seen by the increased performance when B₁₂ is injected, see Journal Dairy Science article previously cited.

GB866924 discloses a pellet for administration to ruminants for providing a biologically active substance over an extended period of time. The pellet can contain 75% cobaltic oxide and 25% clay.

K Uchida et al - "Effect of feeding a combination of zinc, manganese and copper amino acid complexes, and cobalt glucoheptonate on performance of early lactation high producing dairy cows" - Animal Feed Science and Technology, Vol. 93, no. 3-4, October 2001, p.193-203, ISSN:0377-8401, DOI:10.1016/S0377-8401(01)00279-6 discloses a mixed cobalt source composition for feeding to cows comprising 0.58mg/kg Co-glucoheptonate and 0.67mg/kg Co from an inorganic Co source.

HT Ballantine et al - "Effects of feeding complexed zinc, manganese, copper and cobalt to late gestation and lactating dairy cows on claw integrity, reproduction, and lactation performance", The professional animal scientist, Vol. 18, no. 3, September 2002, p.211-218, DOI:dor.org/10.15232/S1080-7466(15)31524-2 discloses a mixed cobalt source composition for feeding to cows comprising 1.4% DM of a trace mineral source comprising Co-sulfate and 0.9% DM of a complexed mineral source comprising Co-glucoheptonate.

DT Pal et al - "Organic trace minerals for improving livestock production ", Broadening

Horizons No. 15, May 2015, p. 1-14, www.feedpedia.org/content/organic-trace-minerals-improving-livestock-production discloses the utilization of Co by sheep fed dietary levels of 40-60mg/kg from cobalt-sulphate and cobalt-glucoheptonate. WO91/11915 discloses a feed pellet for increasing ruminal microbial activity. The feed pellet is formed of a complex of polysaccharides of low ruminal solubility suspended within the complex and a combination of chemicals which increase ruminal microbial activity over extended periods of time as the chemicals are slowly released into the ruminal fluids.

### SUMMARY OF THE INVENTION

In one aspect of the present invention there is provided a mixed cobalt source composition for feeding to ruminants to control rumen release rate of cobalt for conversion by rumen bacteria to vitamin B₁₂ according to claim 1.

The composition of the present invention provides a unique source of cobalt for enhanced production of Vitamin B₁₂ in the rumen. It has the advantage of a slow release source of cobalt combined with a fast release source of cobalt. The fast cobalt ion release source which is a soluble source of cobalt is turned over faster in the rumen than the solid cobalt sources are turned over. Thus slower release , for example longer polymer strands of cobalt ligands, are digested over a longer period of time, giving slower release of the cobalt. In this way, a portion of the cobalt mixture is soluble and another portion substantially insoluble; the insoluble portion will remain in the rumen longer. As the bacteria consume, for example, a polysaccharide of cobalt, it will release the cobalt for B₁₂ production. Alternatively, non-rumen degradable polymers like polyacrylic acid would just slowly release cobalt. Surprisingly such control or slow release of cobalt to the rumen bacteria in combination with a faster release is shown by data to have greater B₁₂ production than an all soluble cobalt source, or an all insoluble source.

### BRIEF DESCRIPTION OF THE DRAWINGS

Figure 1 is a graph comparing milk production where the only difference in the animal feed is the cobalt source.
Figure 2 examines the serum B₁₂ status of sheep after use for preparations of examples 1, 2 and 4.
Figure 3 shows pre- and post-treatment serum B₁₂ levels for preparations of examples 4 and 8.
Figure 4 shows pre- and post-treatment serum B₁₂ levels for formulations of examples 13, 2 and 15.
Figure 5 shows pre- and post-treatment blood serum B₁₂ for formulations of examples 7, 9 and 10.

### DETAILED DESCRIPTION OF THE PREFERRED EMBODIMENTS

This invention involves a mixture of a quick release cobalt source and a slow release cobalt source as defined in claim 1, which when fed to a ruminant animal, allows some cobalt ions (the quick release) to immediately be used by the rumen bacteria in making Vitamin B₁₂, with the balance to slowly release additional cobalt ions as it is more slowly metabolized by the microorganisms of the rumen. Studies have surprisingly demonstrated this combination of quick release and slow release cobalt sources results in more efficient and effective production of Vitamin B₁₂ than either source alone. Not wishing to be bound by any theory, it is believed this occurs because the quick release passes through the rumen faster than the bacteria can metabolize it to Vitamin B₁₂ thus much of it "wasted". In contrast the slow release source of cobalt occurs as the rumen microorganisms gradually metabolize larger molecules of the more insoluble polymers releasing the cobalt to make Vitamin B₁₂. In the case of all slow release time is "wasted" with limited cobalt available to result in less B₁₂.

Quick release sources of cobalt include soluble inorganic and organic sources of cobalt such as cobalt chloride, cobalt sulfate, cobalt acetate and other fast release (soluble) cobalt monomer sugar complexes like for example cobalt glucoheptonate or cobalt gluconate, as shown in the assignees earlier U.S. Patent 4,678,854, of July 7, 1987.

Slow release cobalt sources include polymer complexes with pendant carboxylic acid groups, all of which are largely insoluble.

The quick release cobalt source allows the cobalt to immediately be available to the bacteria from the liquid in the rumen, although much of it passes through so quickly that it cannot all be used. The slow release cobalt source remains in the rumen and passes through only when the microorganisms metabolize the polymer or the salt slowly releases the cobalt which results in a gradually available cobalt source for the making of Vitamin B₁₂ or a gradual release of cobalt from the insoluble form.

The key is to have some polymer bound soluble cobalt and some portion of that being insoluble. This creates a situation where the soluble fraction can immediately start being utilized by the bacteria. As the fluid is turned over in the rumen the cobalt available to the bacteria in an all soluble (inorganic or low molecular weight ligands) will be removed from the rumen. By this time the bacteria will have been degrading the polymer from the polymer bound cobalt releasing this cobalt fraction to the rumen fluid. In essence this "insoluble" fraction is a controlled release source of cobalt. Surprisingly it is best to have both types of cobalt present to optimize vitamin B12 production. The polymer bound insoluble portion can be derived from any acid containing polymer. The prime examples are pectin (part of the present invention) and alginic acid (not part of the present invention).

### Example 1 (not according to the present invention)

### Cobalt Pectin - 2eq. Cobalt, 10eq. NaOH, 12 hours at 20°C

To 750mL of dI water is added sodium hydroxide (59.92g, 1.49mols). To this alkaline solution pectin (30.01g, 0.169 mols of carboxylic acid subunits) is added slowly so as to disperse finely upon the surface of the solution. The fine dispersion quickly becomes a dark orange suspension which is allowed to stir for 12 hours at 20°C. The pH is adjusted to 8.8 with 12M HCl acid at this point solid CoCl₂ 6H₂O (80.42g, 0.338mols) is added to the reaction in one portion. The resulting pink suspension is stirred for an additional 1 hour and then dried at 88°C for 12 hours. The final blue powder is homogenized and analyzed for cobalt levels.

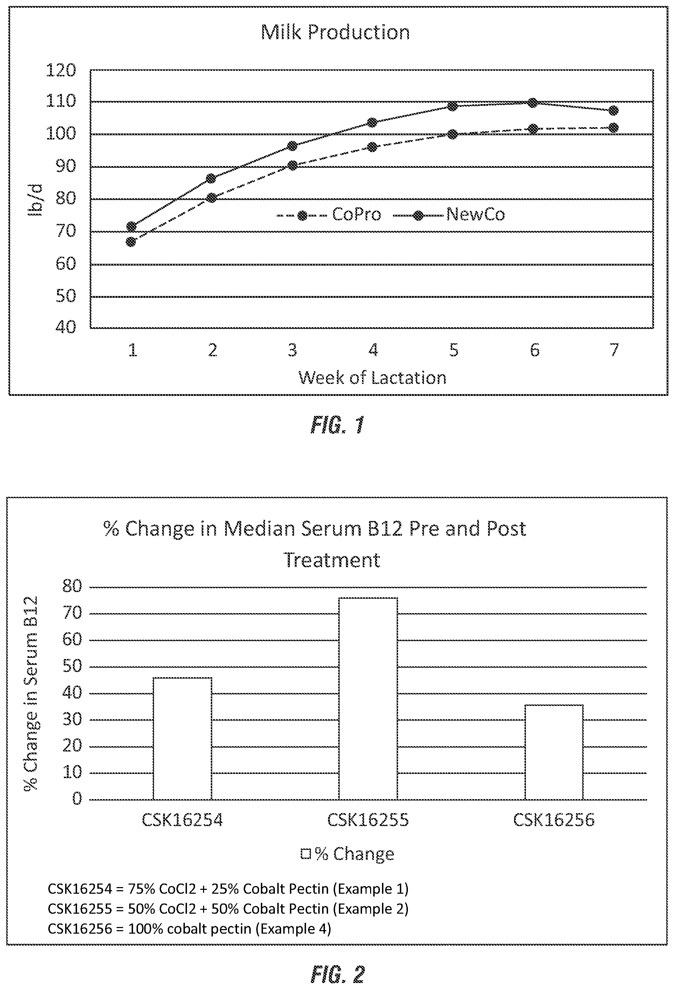

Figure 1 compares the milk production where the only difference in the animal feed is the cobalt source. The CoPro source is cobalt glucoheptonate. This is a soluble monomer sugar ligand to the cobalt. When we used an example of the new cobalt source being 75% cobalt chloride and 25% cobalt pectin an increase in milk production was noted.

**Table 1**

| Item | CoPro | Invention Cobalt | SE of Mean difference | P-value |
|---|---|---|---|---|
| Milk, lb/d | 89.9 | 97.0 | 3.0 | 0.02 |

This milk production increase was statistically significant.

### Example 2 (not according to the present invention)

### Cobalt Pectin - 1eq. Cobalt, 10eq. NaOH, 12 hours at 20°C

To 750mL of dI water is added sodium hydroxide (60.02g, 1.50mols). To this alkaline solution pectin (30.05g, 0.169 mols of carboxylic acid subunits) is added slowly so as to disperse finely upon the surface of the solution. The fine dispersion quickly becomes a dark orange suspension which is allowed to stir for 12 hours at 20°C. The pH is adjusted to 8.8 with 12M HCl acid at this point solid CoCl₂ 6H₂O (40.44g, 0.170mols) is added to the reaction in one portion. The resulting pink suspension is stirred for an additional 1 hour and then dried at 88°C for 12 hours. The final blue powder is homogenized and analyzed for cobalt levels.

### Example 3 (not according to the present invention)

### Cobalt Pectin - 0.66eq. Cobalt, 10eq. NaOH, 12 hours at 20°C

To 750mL of dI water is added sodium hydroxide (60.09g, 1.50mols). To this alkaline solution pectin (30.03g, 0.169 mols of carboxylic acid subunits) is added slowly so as to disperse finely upon the surface of the solution. The fine dispersion quickly becomes a dark orange suspension which is allowed to stir for 12 hours at 20°C. The pH is adjusted to 8.8 with 12M HCl acid at this point solid CoCl₂ 6H₂O (26.50g, 0.112mols) is added to the reaction in one portion. The resulting pink suspension is stirred for an additional 1 hour and then dried at 88°C for 12 hours. The final blue powder is homogenized and analyzed for cobalt levels.

### Example 4 (not according to the present invention)

### Cobalt Pectin - 0.5eq. Cobalt, 10eq. NaOH, 12 hours at 20°C

To 750mL of dI water is added sodium hydroxide (59.96g, 1.49mols). To this alkaline solution pectin (29.99g, 0.169 mols of carboxylic acid subunits) is added slowly so as to disperse finely upon the surface of the solution. The fine dispersion quickly becomes a dark orange suspension which is allowed to stir for 12 hours at 20°C. The pH is adjusted to 8.8 with 12M HCl acid at this point solid CoCl₂ 6H₂O (20.11g, 0.085mols) is added to the reaction in one portion. The resulting pink suspension is stirred for an additional 1 hour and then dried at 88°C for 12 hours. The final blue powder is homogenized and analyzed for cobalt levels.

### Example 5 (not according to the present invention)

### Cobalt Alginic - 2eq. Cobalt, 10eq. NaOH, 12 hours at 20°C

To 750mL of dI water is added sodium hydroxide (60.01g, 1.50mols). To this alkaline solution alginic acid (29.90g, 0.168 mols of carboxylic acid subunits) is added slowly so as to disperse finely upon the surface of the solution. The fine dispersion quickly becomes a dark yellow brown suspension which is allowed to stir for 12 hours at 20°C. The pH is adjusted to 8.8 with 12M HCl acid at this point solid CoCl₂ 6H₂O (80.41g, 0.338mols) is added to the reaction in one portion. The resulting pink suspension is stirred for an additional 1 hour and then dried at 88°C for 12 hours. The final blue powder is homogenized and analyzed for cobalt levels.

### Example 6 (not according to the present invention)

### Cobalt Alginic - 1eq. Cobalt, 10eq. NaOH, 12 hours at 20°C

To 750mL of dI water is added sodium hydroxide (59.95g, 1.49mols). To this alkaline solution alginic acid (30.01g, 0.169 mols of carboxylic acid subunits) is added slowly so as to disperse finely upon the surface of the solution. The fine dispersion quickly becomes a dark yellow brown suspension which is allowed to stir for 12 hours at 20°C. The pH is adjusted to 8.8 with 12M HCl acid at this point solid CoCl₂ 6H₂O (40.15g, 0.168mols) is added to the reaction in one portion. The resulting pink suspension is stirred for an additional 1 hour and then dried at 88°C for 12 hours. The final blue powder is homogenized and analyzed for cobalt levels.

### Example 7 (not according to the present invention)

### Cobalt Alginic - 0.66eq. Cobalt, 10eq. NaOH, 12 hours at 20°C

To 750mL of dI water is added sodium hydroxide (59.99g, 1.50mols). To this alkaline solution alginic acid (29.98g, 0.169 mols of carboxylic acid subunits) is added slowly so as to disperse finely upon the surface of the solution. The fine dispersion quickly becomes a dark yellow brown suspension which is allowed to stir for 12 hours at 20°C. The pH is adjusted to 8.8 with 12M HCl acid at this point solid CoCl₂ 6H₂O (26.53g, 0.112mols) is added to the reaction in one portion. The resulting pink suspension is stirred for an additional 1 hour and then dried at 88°C for 12 hours. The final blue powder is homogenized and analyzed for cobalt levels.

### Example 8 (not according to the present invention)

### Cobalt Alginic - 0.5eq. Cobalt, 10eq. NaOH, 12 hours at 20°C

To 750mL of dI water is added sodium hydroxide (60.02g, 1.50mols). To this alkaline solution alginic acid (30.06g, 0.169 mols of carboxylic acid subunits) is added slowly so as to disperse finely upon the surface of the solution. The fine dispersion quickly becomes a dark yellow brown suspension which is allowed to stir for 12 hours at 20°C. The pH is adjusted to 8.8 with 12M HCl acid at this point solid CoCl₂ 6H₂O (20.08g, 0.085mols) is added to the reaction in one portion. The resulting pink suspension is stirred for an additional 1 hour and then dried at 88°C for 12 hours. The final blue powder is homogenized and analyzed for cobalt levels.

### Example 9 (not according to the present invention)

### Cobalt Polyacrylic Acid - 2eq. Cobalt, 1eq. NaOH

To 750mL of dI water is added sodium hydroxide (2.04g, 0.051mols). To this alkaline solution 50% polyacrylic acid (7.57g, 0.051 mols of carboxylic acid subunits) is added in one portion. The clear solution is allowed to stir for 10 minutes at which point CoCl₂ 6H₂O (24.28g, 0.102mols) is added in one portion. The pink suspension is stirred for an additional one hour at room temperature and then dried at 88°C for 12 hours. The final blue powder is homogenized and analyzed for cobalt levels.

### Example 10 (not according to the present invention)

### Cobalt Polyacrylic Acid - 1eq. Cobalt, 1eq. NaOH

To 750mL of dI water is added sodium hydroxide (2.10g, 0.051mols). To this alkaline solution 50% polyacrylic acid (7.54g, 0.051 mols of carboxylic acid subunits) is added in one portion. The clear solution is allowed to stir for 10 minutes at which point CoCl₂ 6H₂O (12.14g, 0.051mols) is added in one portion. The pink suspension is stirred for an additional one hour at room temperature and then dried at 88°C for 12 hours. The final blue powder is homogenized and analyzed for cobalt levels.

### Example 11 (not according to the present invention)

### Cobalt Polyacrylic Acid - 0.66eq. Cobalt, 1eq. NaOH

To 750mL of dI water is added sodium hydroxide (2.04g, 0.051mols). To this alkaline solution 50% polyacrylic acid (7.60g, 0.051 mols of carboxylic acid subunits) is added in one portion. The clear solution is allowed to stir for 10 minutes at which point CoCl₂ 6H₂O (8.00g, 0.034mols) is added in one portion. The pink suspension is stirred for an additional one hour at room temperature and then dried at 88°C for 12 hours. The final blue powder is homogenized and analyzed for cobalt levels.

### Example 12 (not according to the present invention)

### Cobalt Polyacrylic Acid - 0.5eq. Cobalt, 1eq. NaOH

To 750mL of dI water is added sodium hydroxide (2.01g, 0.051mols). To this alkaline solution 50% polyacrylic acid (7.57g, 0.051 mols of carboxylic acid subunits) is added in one portion. The clear solution is allowed to stir for 10 minutes at which point CoCl₂ 6H₂O (6.08g, 0.102mols) is added in one portion. The pink suspension is stirred for an additional one hour at room temperature and then dried at 88°C for 12 hours. The final blue powder is homogenized and analyzed for cobalt levels.

### Example 13 (not according to the present invention)

### Cobalt Pectin 1eq. Cobalt (50% Organic/50% Inorganic) - 2.5 hours at 70°C - 1eq. Base - No HCl

To 370mL of dI water is added sodium hydroxide (6.74g, 0.168mols). To this alkaline solution pectin (30.01g, 0.169 mols of carboxylic acid subunits) is added slowly so as to disperse finely upon the surface of the solution. The fine dispersion quickly becomes a dark orange suspension which is allowed to stir for 2.5 hours at 70°C. At this point solid CoCl₂ 6H₂O (40.21g, 0.169mols) is added to the reaction in one portion and the pH of 12.31 is consequently reduced to 5.868. The resulting pink suspension is stirred for an additional 1 hour and then dried at 88°C for 12 hours. The final blue powder is homogenized and analyzed for cobalt levels and molecular weight.

### Example 14 (not according to the present invention)

### Cobalt Pectin - 1eq. Cobalt, 1eq. NaOH, 2 hours at 70°C, HCl Quench

To 370mL of dI water is added sodium hydroxide (6.79g, 0.169mols). To this alkaline solution pectin (40.49g, 0.169 mols of carboxylic acid subunits) is added slowly so as to disperse finely upon the surface of the solution. The fine dispersion quickly becomes a dark orange suspension which is allowed to stir for 2 hours at 70°C. The pH is adjusted to 8.8 with 12M HCl (10.5mL, 126mmols) acid at this point solid CoCl₂ 6H₂O (40.08g, 0.170mols) is added to the reaction in one portion. The resulting pink suspension is stirred for an additional 1 hour and then dried at 88°C for 12 hours. The final blue powder is homogenized and analyzed for cobalt levels.

### Example 15 (not according to the present invention)

### Cobalt Pectin - 0.66eq. Cobalt, 1eq. NaOH, 2 hours at 70°C, No HCl Quench

To 370mL of dI water is added sodium hydroxide (6.70g, 0.168mols). To this alkaline solution pectin (40.45g, 0.169 mols of carboxylic acid subunits) is added slowly so as to disperse finely upon the surface of the solution. The fine dispersion quickly becomes a dark orange suspension which is allowed to stir for 2 hours at 70°C. At this point solid CoCl₂ 6H₂O (26.40g, 0.112mols) is added to the reaction in one portion and the pH of 12.45 is consequently reduced to 5.938. The resulting pink suspension is stirred for an additional 1 hour and then dried at 88°C for 12 hours. The final blue powder is homogenized and analyzed for cobalt levels and molecular weight.

### Example 16 (not according to the present invention)

### Cobalt Pectin - 0.5eq. Cobalt, 1eq. NaOH, 2 hours at 70°C, No HCl Quench

To 370mL of dI water is added sodium hydroxide (6.81g, 0.169mols). To this alkaline solution pectin (40.53g, 0.169 mols of carboxylic acid subunits) is added slowly so as to disperse finely upon the surface of the solution. The fine dispersion quickly becomes a dark orange suspension which is allowed to stir for 2 hours at 70°C. At this point solid CoCl₂ 6H₂O (20.07g, 0.085mols) is added to the reaction in one portion and the pH of 12.40 is consequently reduced to 5.871. The resulting pink suspension is stirred for an additional 1 hour and then dried at 88°C for 12 hours. The final blue powder is homogenized and analyzed for cobalt levels and molecular weight.

### Example 17 (not according to the present invention)

### Cobalt Pectin - 1eq. Cobalt, 2eq. NaOH, 2 hours at 70°C, HCl Quench

To 370mL of dI water is added sodium hydroxide (13.51g, 0.338mols). To this alkaline solution pectin (40.46g, 0.169 mols of carboxylic acid subunits) is added slowly so as to disperse finely upon the surface of the solution. The fine dispersion quickly becomes a dark orange suspension which is allowed to stir for 2 hours at 70°C. The pH is adjusted to 8.8 with 12M HCl (21.5mL, 258mmols) acid at this point solid CoCl₂ 6H₂O (39.91g, 0.169mols) is added to the reaction in one portion. The resulting pink suspension is stirred for an additional 1 hour and then dried at 88°C for 12 hours. The final blue powder is homogenized and analyzed for cobalt levels.

### Example 18 (not according to the present invention)

### Cobalt Pectin - 1eq. Cobalt, 4eq. NaOH, 2 hours at 70°C, HCl Quench

To 370mL of dI water is added sodium hydroxide (27.01g, 0.68mols). To this alkaline solution pectin (40.54g, 0.169 mols of carboxylic acid subunits) is added slowly so as to disperse finely upon the surface of the solution. The fine dispersion quickly becomes a dark orange suspension which is allowed to stir for 2 hours at 70°C. The pH is adjusted to 8.8 with 12M HCl (43mL, 516mmols) acid at this point solid CoCl₂ 6H₂O (39.91g, 0.169mols) is added to the reaction in one portion. The resulting pink suspension is stirred for an additional 1 hour and then dried at 88°C for 12 hours. The final blue powder is homogenized and analyzed for cobalt levels.

### Example 19 (not according to the present invention)

### Cobalt Pectin - 1.5eq. Cobalt, 1eq. NaOH, 2 hours at 70°C, HCl Quench

To 370mL of dI water is added sodium hydroxide (6.74g, 0.168mols). To this alkaline solution pectin (40.48g, 0.169 mols of carboxylic acid subunits) is added slowly so as to disperse finely upon the surface of the solution. The fine dispersion quickly becomes a dark orange suspension which is allowed to stir for 2 hours at 70°C. The pH is adjusted to 8.8 with 12M HCl (10.8mL, 130mmols) acid at this point solid CoCl₂ 6H₂O (60.03g, 0.26mols) is added to the reaction in one portion. The resulting pink suspension is stirred for an additional 1 hour and then dried at 88°C for 12 hours. The final blue powder is homogenized and analyzed for cobalt levels.

### Example 20 (not according to the present invention)

### Cobalt Pectin - 1eq. Cobalt, 1eq. NaOH, 2 hours at 20°C, HCl Quench

To 370mL of dI water is added sodium hydroxide (6.81g, 0.169mols). To this alkaline solution pectin (40.5g, 0.169 mols of carboxylic acid subunits) is added slowly so as to disperse finely upon the surface of the solution. The fine dispersion quickly becomes a dark orange suspension which is allowed to stir for 2 hours at 20°C. The pH is adjusted to 8.8 with 12M HCl (10.5mL, 126mmols) acid at this point solid CoCl₂ 6H₂O (40.08g, 0.170mols) is added to the reaction in one portion. The resulting pink suspension is stirred for an additional 1 hour and then dried at 88°C for 12 hours. The final blue powder is homogenized and analyzed for cobalt levels.

### Example 21

The pre and post treatment data after receiving the given cobalt source by sheep is shown in Figure 2. In Figure 2 three cobalt sources were studied. CSK16254 was 75% CoCl2 and 25% cobalt pectin (Example 1) (not part of the present invention), CSK16255 was 50% CoCl2 and 50% cobalt pectin (Example 2) according to the present invention, CSK16256 was 100% cobalt pectin (Example 4) (not part of the present invention). This study demonstrates that having a combination of soluble and monomeric ligand with a polymer bound cobalt source is advantageous over only the cobalt polymer bound form.

### Example 22 (not according to the present invention)

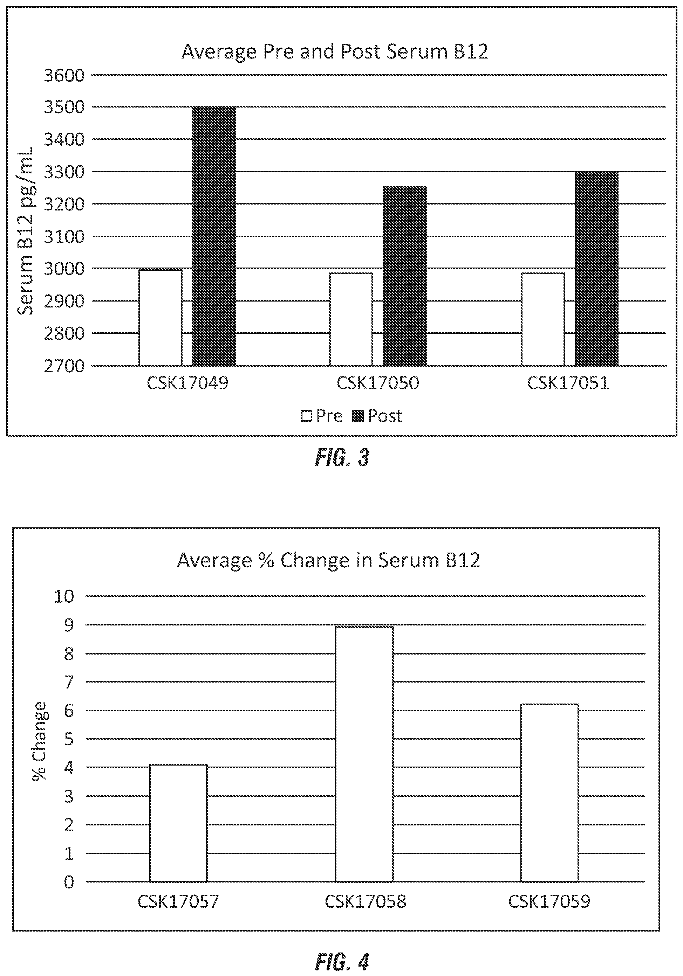

Figure 3 and the data shown reflect the change in B₁₂ levels in sheep. The pretreatment is before the addition of the cobalt treatments and the post is after the cobalt treatments. CSK17049 is 25% cobalt glucoheptonate and 75% cobalt pectin from example 4 (not forming part of the present invention), CSK17050 is 25% cobalt chloride and 75% cobalt pectin from example 4 (not forming part of the present invention), and CSK17051 is 25% cobalt chloride and 75% cobalt alginic acid from example 8 (not forming part of the present invention). The data demonstrates that all of these combinations give a strong increase of vitamin B₁₂ in the sheep.

### Example 23

Figure 4 and the data shown reflect the average change in B₁₂ levels from pre and post cobalt treatments in sheep. The pretreatment is before the addition of the cobalt treatments and the post is after the cobalt treatments. CSK17057 is 50% cobalt chloride and 50% cobalt pectin from example 13 (forming part of the present invention), CSK17058 is 50% cobalt chloride and 50% cobalt pectin from example 2 (forming part of the present invention), and CSK17059 is 25% cobalt chloride and 75% cobalt pectin from example 15 (not forming part of the present invention). The data demonstrates that all of these combinations give a strong increase of Vitamin B₁₂ in the sheep.

### Example 24 (not according to the present invention)

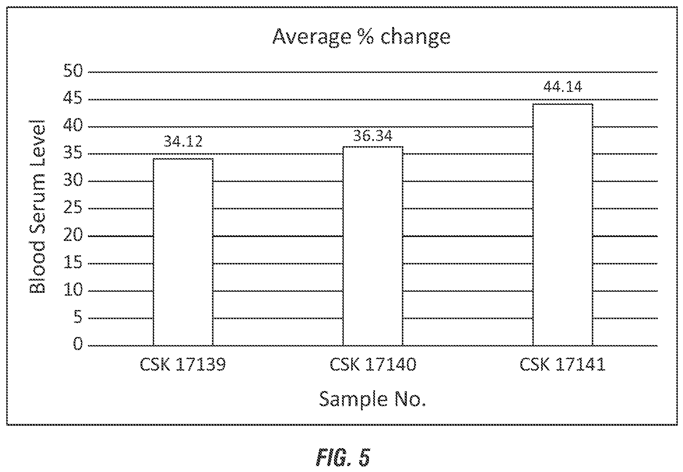

Figure 5 and the data shown reflects the average change in B12 levels from pre and post cobalt treatment in sheep. The pretreatment is before the addition of the cobalt treatments and the post is after the treatment. CSK17139 is 75% cobalt chloride and 25 % cobalt polyacrylic acid from example 9 (not forming part of the present invention). CSK17140 is 50% cobalt chloride and 50% cobalt polyacrylic acid from example 10 (not forming part of the present invention). CSK17141 is 25% cobalt chloride and 75% cobalt alginic acid from example 7 (not forming part of the present invention). The data demonstrates that all of these combinations give a strong increase of Vitamin B12 in the sheep.

As earlier explained Examples 1-24 are illustrative only. They are offered to provide support for the attached claims.

## Claims

1. A mixed cobalt source composition for feeding to ruminant animals to control rumen release rate of cobalt for conversion by rumen bacteria to vitamin B₁₂ comprising:
a quick release source of cobalt and a slow release source of cobalt;
wherein the mixed cobalt source is 50% by weight of the quick release source of cobalt and 50% by weight of the slow release source of cobalt;
and wherein the slow release source of cobalt is cobalt pectin and the quick release source of cobalt is cobalt chloride.

## Patentansprüche

1. Gemischte Cobaltquellenzusammensetzung zur Verfütterung an Wiederkäuer zur Steuerung der Freisetzungsrate von Cobalt im Pansen zur Umwandlung durch Pansenbakterien in Vitamin B₁₂, umfassend:
eine Quelle von Cobalt mit schneller Freisetzung und eine Quelle von Cobalt mit langsamer Freisetzung;
wobei die gemischte Cobaltquelle aus 50 Gewichts-% der Quelle von Cobalt mit schneller Freisetzung und 50 Gewichts-% der Quelle von Cobalt mit langsamer Freisetzung besteht;
und wobei die Quelle von Cobalt mit langsamer Freisetzung an Pektin gebundenes Cobalt ist und die Quelle von Cobalt mit schneller Freisetzung Cobaltchlorid ist.

## Revendications

1. Composition de source de cobalt mixte pour l'alimentation des ruminants afin de réguler le taux de libération de cobalt dans le rumen pour la conversion par les bactéries du rumen en vitamine B₁₂ comprenant :
une source de cobalt à libération rapide et une source de cobalt à libération lente ;
où la source de cobalt mixte représente 50 % en poids de la source de cobalt à libération rapide et 50 % en poids de la source de cobalt à libération lente ;
et où la source de cobalt à libération lente est de la pectine de cobalt et la source de cobalt à libération rapide est du chlorure de cobalt.
